# FASCICULE DE BREVET EUROPEEN

(11) **EP 2 988 952 B1**
(45) Date de publication et mention de la délivrance du brevet: **05.06.2019**
(21) Numéro de dépôt: 14720675.9
(22) Date de dépôt: 10.04.2014
(51) Int. Cl.: B60B 1/08, B60B 5/02, B29C 45/00

(54) **ROUE DE VEHICULE OBTENUE A PARTIR D'UN POLYMERE THERMOPLASTIQUE**
FAHRZEUGRAD AUS EINEM THERMOPLASTISCHEN POLYMER
VEHICLE WHEEL OBTAINED FROM A THERMOPLASTIC POLYMER

(30) Priorité: 26.04.2013 FR 1353827
(43) Date de publication de la demande: 02.03.2016
(73) Titulaire: Renault, 92100 Boulogne Billancourt (FR)
(72) Inventeur: GAUGE, Gabrielle, F-78000 Versailles (FR); JAUNASSE, Philippe, F-75015 Paris (FR)
(86) Numéro de dépôt international: PCT/FR2014/050860
(87) Numéro de publication internationale: WO 2014/174175

(56) Documents cités:
- EP-A2- 2 143 635
- WO-A1-2011/000070
- DE-U1- 20 306 744
- FR-A1- 2 516 867
- US-A- 3 917 352
- K-H KNAB: "Hoehere Prduktqualitaet durch hoehere Festigkeit", KUNSTOFFE, CARL HANSER VERLAG, MUNCHEN, DE, vol. 102, no. 3, 1 mars 2012 (2012-03-01), pages 87-88, XP001526193, ISSN: 0023-5563

## Description

L'invention se rapporte à une roue obtenue à partir d'un polymère thermoplastique. Ce type de roue peut être monté sur une pluralité de véhicules, comme par exemple, une automobile, un véhicule utilitaire, un camion, une motocyclette, un véhicule de transport ou n'importe quel type de véhicules agricoles. L'invention se rapporte à une roue réalisée en thermoplastique et de conception améliorée.

Une roue obtenue à partir d'un polymère thermoplastique existe et a déjà fait l'objet de brevets. On peut par exemple, citer la demande WO2011/000070 qui décrit une roue en matériau polymère, dont la composition est optimisée afin d'obtenir de bonnes propriétés mécaniques et faciliter son procédé de fabrication. Cette composition permet également de garantir une longue durée de vie à ladite roue, malgré les attaques chimiques dont elle peut faire l'objet et malgré les mauvaises conditions météorologiques. La roue, qui est divulguée dans ce document, présente l'inconvénient de ne pas avoir une géométrie optimisée, permettant de tirer le maximum de bénéfice de l'utilisation d'un matériau polymère.

Les documents DE-U-20306744 et FR-A-2516867 décrivent quant à eux des roues de véhicule en polymère conformes au préambule de la revendication 1.

La roue est l'un des éléments de liaison au sol d'un véhicule qui est soumis à de nombreuses contraintes extérieures : un effort statique dû à la masse du véhicule, une force centrifuge en virage, des efforts dynamiques dus aux suspensions, des couples d'accélération et freinage, une pression de l'air du pneumatique. La roue peut également être soumise à des températures élevées, lors par exemple de freinages répétés, avec des problématiques de refroidissement à prendre en compte, et peut également subir des contraintes chimiques avec par exemple la présence de sels de déneigement ou de divers fluides. En outre, la roue doit contribuer à la performance aérodynamique du véhicule.

Il est par ailleurs souhaitable que la roue présente une masse réduite afin de diminuer les masses non suspendues, et ainsi améliorer la tenue de route du véhicule. La réduction de masse permet également de diminuer les moments d'inerties de la roue, réduisant ainsi la puissance de freinage ainsi que la puissance motrice nécessaires et améliorant le ressenti de conduite. Enfin, une réduction de la masse de la roue permet d'abaisser la masse globale du véhicule, avec pour conséquence majeure, une réduction de la consommation de carburant.

Une roue de véhicule selon l'invention est obtenue à partir d'un polymère thermoplastique, et présente une géométrie optimisée permettant de répondre à toutes les contraintes ci-avant mentionnées.

L'invention a pour objet une roue de véhicule obtenue à partir d'un polymère thermoplastique, ladite roue comprenant une jante, un moyeu et un voile s'étendant entre ladite jante et ledit moyeu, ledit voile comportant un réseau de nervures inséré entre deux parois annulaires.

La principale caractéristique d'une roue selon l'invention est que la jante, les deux parois annulaires et le réseau de nervures sont réalisés à partir d'un matériau polymère thermoplastique, chaque nervure s'étendant tangentiellement au moyeu. En effet, il est supposé que le moyeu est de forme cylindrique. Le fait que les nervures soient disposées tangentiellement au moyeu, permet notamment à la roue d'encaisser les différents efforts et couples engendrés lors des phases de freinage et d'accélération du véhicule. Le moyeu constitue la partie centrale de la roue qui permet la fixation de ladite roue au véhicule. Cette géométrie particulière de la roue a été mise au point pour augmenter au maximum les inerties de section afin de minimiser les niveaux de contraintes dans la structure générés par les efforts et couples extérieurs. Ces faibles niveaux de contraintes permettent donc d'utiliser des matériaux à faibles caractéristiques mécaniques, comme par exemple les thermoplastiques renforcés. La roue selon l'invention présente une grande rigidité tout en possédant une masse réduite. Les deux parois annulaires du voile sont disposées perpendiculairement à l'axe de rotation de la roue, et peuvent être, soit rigoureusement planes, soit sensiblement planes avec quelques formes. Préférentiellement, lesdites parois présentent des ouvertures permettant d'alléger la roue et de réguler la température de ladite roue grâce aux passages d'air qu'elles créent. Le réseau de nervures autour du moyeu. Il est supposé que le réseau de nervures est équitablement réparti autour de la roue, de façon à symétriser et à uniformiser la structure de la roue. Le moyeu peut être réalisé intégralement en métal ou être réalisé dans un thermoplastique. Selon une variante de réalisation préférée de l'invention, le matériau thermoplastique est le même pour la jante, les deux parois annulaires et le réseau de nervures. Avantageusement, le voile présente un canal interne délimité par une paroi cylindrique et destiné à loger le moyeu, les nervures prenant naissance au niveau de la surface externe de cette paroi cylindrique, pour s'étendre vers la jante de façon tangentielle à ladite paroi cylindrique.

Avantageusement, chaque nervure relie une paroi cylindrique du voile délimitant un canal interne destiné à loger le moyeu, et la jante. Préférentiellement, la paroi cylindrique est disposée dans la zone centrale du voile de façon concentrique par rapport à la jante.

De façon préférentielle, une première extrémité de chaque nervure est solidaire de la jante et une deuxième extrémité de chacune desdites nervures est solidaire de la paroi cylindrique du voile délimitant le canal interne. Plus précisément, chaque nervure prend naissance au niveau de la surface externe de la paroi cylindrique délimitant le canal interne de la roue destiné à loger le moyeu. De cette manière, chaque nervure constitue une entretoise entre la jante et le moyeu, ce qui contribue à la bonne tenue mécanique de la roue. Préférentiellement, le réseau de nervures comprend un premier sous-groupe de nervures orientées dans le sens horaire et un deuxième sous-groupe de nervures orientées dans le sens trigonométrique. La présence de ces deux sous-groupes agencés en opposition, permet à la roue d'encaisser à la fois les efforts et couples engendrés lors d'une phase d'accélération du véhicule, et les efforts et couples produits lors d'une phase de freinage dudit véhicule. La roue se retrouve ainsi bien équilibrée, sans risque de présenter dans le temps une déformation ou une usure prématurée liée à une sollicitation usuelle particulière. Une nervure orientée dans le sens horaire, signifie que l'axe longitudinal de la nervure a subi une rotation en sens horaire par rapport à un axe radial de la roue. Cette rotation s'effectue autour du point de contact de cette nervure avec le moyeu. Une nervure est orientée dans le sens trigonométrique lorsque cette rotation s'effectue dans le sens trigonométrique.

De façon avantageuse, chaque sous-réseau est composé de plusieurs sous-ensembles de nervures équitablement répartis autour de la roue, chaque sous-ensemble étant constitué d'au moins deux nervures prenant naissance au niveau d'une zone faiblement étendue du moyeu, et divergeant progressivement vers la jante. Ce type de configuration permet à la roue d'être légère tout en conservant une tenue mécanique optimisée.

Selon un mode de réalisation préféré d'une roue selon l'invention, chaque sous-réseau comporte quatre sous-ensembles de trois nervures chacun, lesdits sous-ensembles étant équitablement répartis autour de la roue. Il s'agit d'une configuration optimisée, constituant un bon compromis entre une légèreté satisfaisante de la roue et une tenue mécanique performante de ladite roue.

Avantageusement, l'épaisseur de chaque nervure est inférieure ou égale à 7 mm, afin être compatible avec la mise en oeuvre d'un thermoplastique. La disposition judicieuse des nervures leur permet d'assurer avec satisfaction une bonne tenue mécanique de la roue tout en demeurant de faible épaisseur, ce qui contribue fortement à l'objectif d'allègement de la roue.

De façon préférentielle, le moyeu comprend une pluralité de formes d'accroche à sa périphérie, lesdites formes d'accroche émergeant dudit moyeu pour former des protubérances. Les formes d'accroche ainsi positionnées, saillent vers l'extérieur du moyeu pour solidariser ledit moyeu au voile de la roue qui l'entoure. Lesdites formes d'accroche constituent un dispositif de blocage dont la géométrie permet de transmettre les efforts et couples entre le moyeu central et le voile qui le surmoule, en réduisant au maximum les contraintes à l'interface dudit moyeu et dudit voile. Il est à noter que ces formes d'accroche périphériques peuvent être réalisées dans le même matériau que celui du reste du moyeu.

Préférentiellement, chaque forme d'accroche s'étend à la périphérie du moyeu parallèlement à l'axe de révolution dudit moyeu, chaque forme d'accroche étant constituée de deux segments bombés non alignés définissant une arête saillante.

De façon avantageuse, chaque arête saillante est située dans la zone centrale de la forme d'accroche. De cette manière, toutes les arêtes des formes d'accroche sont alignées et permettent d'élargir la circonférence du moyeu. Pour cette configuration, le moyeu possède donc une circonférence maximale au niveau desdites arêtes, ladite circonférence diminuant progressivement le long de chaque forme d'accroche en s'éloignant de ladite arête, pour se stabiliser à une circonférence minimale correspondant à une extrémité de ladite forme d'accroche. Cette configuration en saillie du bord latéral du moyeu, empêche ledit moyeu d'être translaté dans le voile parallèlement à son axe de rotation, sous l'effet des diverses sollicitations engendrées lors des phases de roulage du véhicule.

Selon un premier mode de réalisation préféré d'une roue selon l'invention, le moyeu est réalisé à partir d'un polymère en thermoplastique, ledit moyeu possédant au moins un trou pour le passage d'une vis de fixation, chacun desdits trous étant bordé par un insert métallique. Lorsque la roue est montée sur un véhicule, chaque vis de fixation est serrée avec force, et a donc tendance à venir exercer un effort d'écrasement sur ledit moyeu en thermoplastique. Les inserts métalliques bordant les trous dudit moyeu, permettent d'éviter audit moyeu d'être écrasé et de se rompre, en encaissant sans se déformer, la pression de serrage engendrée par lesdites vis après serrage. Pour cette configuration, lorsque ledit moyeu est doté de formes d'accroche périphériques, celles-ci sont également réalisées avec le même matériau polymère que celui du reste dudit moyeu.

Selon un deuxième mode de réalisation préféré d'une roue selon l'invention, le moyeu est métallique. Pour cette configuration, lorsque le moyeu possède des formes d'accroche périphériques, celles-ci sont également réalisées avec le même métal que le reste dudit moyeu.

L'invention a pour deuxième objet un procédé de fabrication d'une roue selon l'invention, ledit procédé s'appuyant sur une technologie d'injection soudure. La principale caractéristique d'un tel procédé est qu'il comprend les étapes suivantes :
- une étape de moulage d'une partie principale constituée de la jante, de l'une des parois annulaires du voile du réseau de nervures, et du moyeu,
- une étape de moulage de l'autre paroi annulaire du voile,
- une étape de soudure de l'autre paroi annulaire sur la partie principale moulée.

Un tel procédé comprend une étape préalable de mise en place des inserts métalliques dans le moule, destinés à venir se placer à l'intérieur du moyeu pour border les trous destinés au passage des vis de fixation de la roue.

L'invention a pour troisième objet un procédé de fabrication d'une roue selon l'invention, ledit procédé s'appuyant sur une technologie de moulage à noyau fusible. La principale caractéristique d'un tel procédé est qu'il comprend les étapes suivantes :
- une étape de mise en oeuvre d'un noyau métallique à bas point de fusion,
- Une étape de démoulage de ce noyau métallique suivie d'un refroidissement dudit noyau métallique,
- Une étape de mise en place de ce noyau métallique dans le moule d'injection de la roue,
- une étape de moulage de la roue dans ledit moule d'injection de la roue, étape pendant laquelle le noyau métallique est surmoulé par le thermoplastique,
- une étape de chauffage de l'ensemble constitué par la roue thermoplastique et le noyau métallique surmoulé permettant de faire fondre le noyau métallique surmoulé,
- une étape d'évacuation du métal en fusion,
- une étape de récupération de la roue moulée.

Si le moyeu de la roue est en thermoplastique, il sera moulé en même temps que la partie principale. Un tel procédé comprendra une étape préalable de mise en place des inserts métalliques dans le moule, destinée à venir se placer à l'intérieur du moyeu thermoplastique au droit de chaque trou de fixation.

Si le moyeu de la roue est métallique, il sera alors préalablement placé dans le moule en même temps que le noyau fusible avant la phase de moulage.

Une roue de véhicule selon l'invention présente l'avantage d'être légère tout en possédant une bonne tenue mécanique permettant d'encaisser les différentes sollicitations générées lors des phases de roulage du véhicule. Elle a de plus l'avantage de pouvoir être fabriquée facilement, rapidement et avec une bonne maîtrise grâce à des techniques de moulage éprouvées, sûres et fiables. Elle présente enfin l'avantage de réduire les coûts, puisqu'elle nécessite peu de matière lors de sa fabrication, et qu'elle supprime les opérations de reprises d'usinages pour la mise en géométrie et enfin qu'elle peut permettre de se passer de peinture de finition en utilisant des thermoplastiques teintés masse.

On donne ci-après, une description détaillée d'un mode de réalisation préféré d'une roue selon l'invention en se référant aux figures 1 à 6.
- La figure 1 est une vue en perspective d'une roue selon l'invention,
- La figure 2 est une vue en éclaté d'une roue selon l'invention,
- La figure 3 est une vue en perspective de la paroi annulaire interne du voile d'une roue selon l'invention,
- La figure 4 est une vue en perspective d'une roue selon l'invention, sans le moyeu et sans la paroi annulaire externe du voile,
- La figure 5 est une vue en perspective d'un moyeu en polymère d'une roue selon l'invention,
- La figure 6 est une vue en coupe partielle d'une roue selon l'invention, dans laquelle le moyeu métallique est intégralement montré et la partie thermoplastique de la roue partiellement coupée.

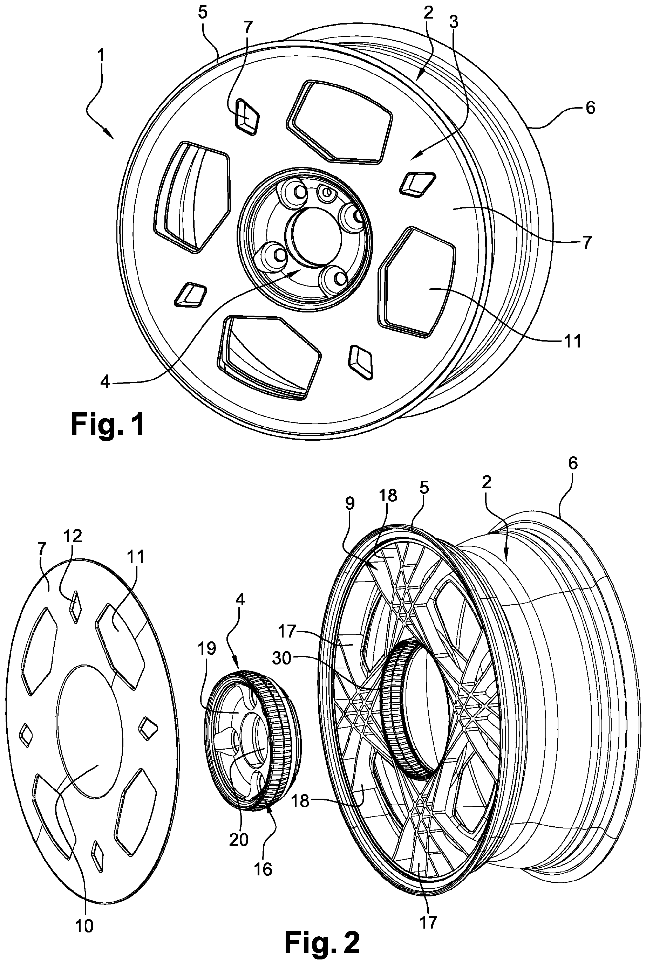

En se référant aux figures 1 et 2, une roue 1 de véhicule selon l'invention comprend une jante 2 et un voile 3 réalisés à partir d'un matériau polymère thermoplastique, ladite roue 1 comportant également un moyeu central 4, pouvant être réalisé, soit avec le même matériau polymère thermoplastique que celui des autres éléments de la roue 1, soit en métal . La jante 2 est assimilable à une paroi cylindrique de diamètre variable, et délimitée par deux bords 5,6 relevés entre lesquels vient s'insérer le pneu. La jante 2 constitue la partie la plus externe de la roue 1 considérée par rapport à son axe de rotation.

Le voile 3 de la roue 1 comporte deux parois annulaires 7, 8 entre lesquelles est placé un réseau de nervures 9, ledit voile 3 constituant la partie de la roue 1 reliant le moyeu 4 et la jante 2. La largeur du voile 3, qui est sa dimension prise suivant l'axe de rotation de la roue 1, est inférieure à la largeur de la jante 2, ledit voile 3 étant positionné sur un coté de la jante 2, en léger retrait du bord relevé extérieur 5 de ladite jante 2.

En se référant à la figure 2, le voile 3 comprend une paroi annulaire 7 externe, qui est sensiblement plane et dotée d'une ouverture centrale circulaire 10 dont le diamètre est sensiblement supérieur à celui du moyeu métallique 4. Cette paroi annulaire externe 7 comporte également une série de quatre grandes ouvertures 11 et une série de quatre ouvertures 12 plus petites, lesdites ouvertures 11,12 étant équitablement réparties en alternance autour d'un cercle, et étant prévues pour assurer des passages d'air et ainsi réguler la température de la roue 1 lorsque le véhicule est en phase de freinage.

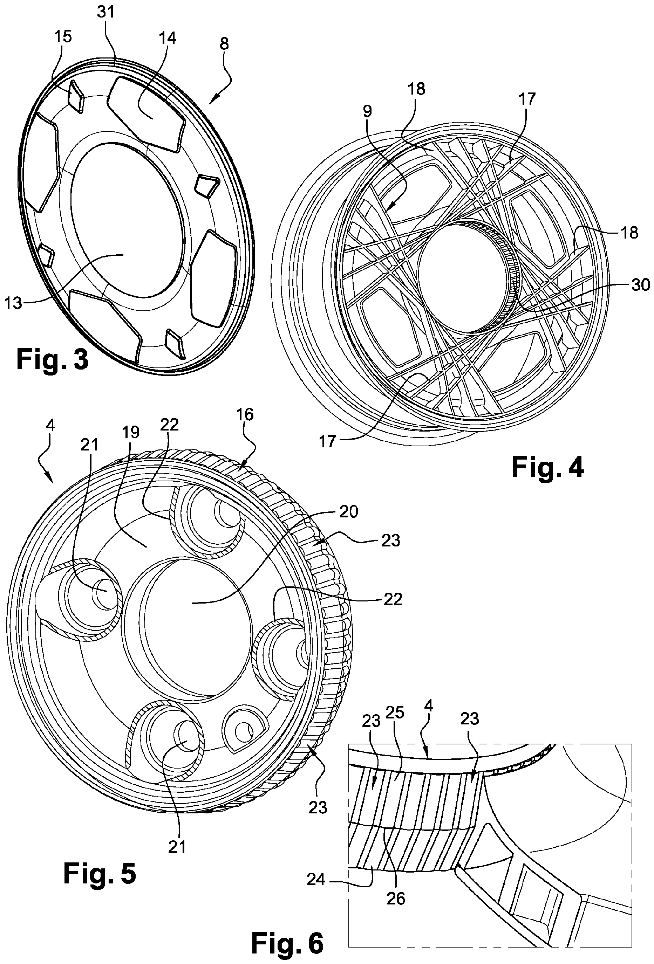

En se référant à la figure 3, le voile 3 comprend une paroi annulaire 8 interne, qui est sensiblement plane et dotée d'une ouverture centrale circulaire 13, dont le diamètre est sensiblement supérieur à celui du moyeu 4. Cette paroi annulaire interne 8 présente un bord relevé 31 périphérique ainsi que les mêmes ouvertures 14,15 que celles de la paroi annulaire externe 7. Les deux parois annulaires 7 et 8 sont destinées à venir se placer autour du moyeu 4 et à enserrer le réseau de nervures 9, en étant parallèles et positionnées l'une par rapport à l'autre de manière à aligner leurs ouvertures respectives 11,12,14,15 pour créer des passages d'air à travers ledit voile 3.

En se référant aux figures 2 et 4 chaque nervure 9 est tangente au moyeu 4. Chaque nervure 9 est plane et possède une largeur sensiblement égale à la distance séparant les deux parois annulaires 7,8 du voile 3, si bien que chacune desdites nervures 9 est au contact desdites parois 7,8. Préférentiellement, les nervures 9 ont une épaisseur inférieure à 7 mm. Une nervure 9 prend naissance au niveau d'une paroi cylindrique 30 du voile 3, délimitant un canal central dans la roue 1, destiné à loger le moyeu 4, et s'étend jusqu'à venir au contact de la jante 2 en étant tangente à ladite paroi cylindrique 30. Le réseau de nervures 9 est subdivisé en deux groupes, un premier groupe pour lequel les nervures 17 sont orientées dans les sens horaire, et un deuxième groupe pour lequel les nervures 18 sont orientées dans le sens trigonométrique. Une nervure 17 est orientée dans le sens horaire, signifie que l'orientation de cette nervure a subi une rotation en sens horaire par rapport à une orientation radiale. Cette rotation s'effectue autour du point de contact de la nervure avec le moyeu 4 jusqu'à l'amener en position tangentielle audit moyeu 4. Une nervure est orientée dans le sens trigonométrique si cette rotation s'effectue dans le sens trigonométrique. Le réseau 9 est formé de plusieurs sous-réseaux, chaque sous-réseau étant composé de plusieurs sous-ensembles de nervures 17,18 équitablement répartis autour de la roue 1, chaque sous-ensemble étant constitué d'au moins deux nervures 17,18 prenant naissance au niveau du moyeu 4, et divergeant progressivement vers la jante 2. Selon un mode de réalisation préféré d'une roue 1 selon l'invention, chaque sous-réseau comporte quatre sous-ensembles de trois nervures 17,18 chacun, lesdits sous-ensembles étant équitablement répartis autour de la roue 1.

En se référant à la figure 1, la paroi annulaire externe 7 du voile 3 délimite extérieurement la roue 1, tandis que la paroi annulaire interne 8 dudit voile 3 est située à l'intérieur de la roue 1.

En se référant à la figure 5, le moyeu 4 comprend une paroi cylindrique externe 16 ainsi qu' une paroi circulaire 19 dotée d'une ouverture centrale 20 destinée à centrer la roue 1, ladite paroi circulaire 19 étant perpendiculaire à l'axe de rotation du de ladite roue 1. Cette paroi circulaire 19 comprend quatre trous 21 équitablement répartis autour de ladite paroi 19, lesdits trous 21 étant prévus pour le passage de vis de fixation. Lorsque le moyeu est réalisé en polymère thermoplastique, chacun desdits trous 21 est entouré par un insert métallique 22 rendu solidaire de la paroi circulaire 19 lors du surmoulage desdits inserts métalliques 22. Ces inserts métalliques 22 sont prévus pour éviter l'écrasement du moyeu 4 en polymère, sous l'effet de la pression de serrage engendrée par chaque vis engagée dans un trou 21 du moyeu 4.

Selon un autre mode de réalisation préféré d'une roue 1 selon l'invention, le moyeu 4 est entièrement métallique et ne nécessite donc pas l'implantation de ces inserts 22 métalliques autour desdits trous 21.

En se référant aux figures 5 ou 6, le moyeu 4 dispose au niveau de sa paroi cylindrique externe 16 d'une pluralité de formes d'accroche 23 saillant vers l'extérieur dudit moyeu 4. Plus précisément les formes d'accroche 23 sont constituées de formes bombées saillantes et placées sur la surface externe de la paroi cylindrique externe 16 du moyeu 4, lesdites formes d'accroche 23 s'étendant parallèlement à l'axe de rotation de la roue 1. Ces formes d'accroche 23 sont proches les unes des autres en laissant subsister des espaces entre elles, et couvrent l'intégralité de la circonférence du moyeu 4. Elles agissent comme des organes de blocage, en empêchant le moyeu 4 d'effectuer une rotation autour de son axe de rotation, dans le voile 3 de la roue 1. En effet, si sa surface externe était lisse, les contraintes générées au niveau de la roue 1 lorsque le véhicule est en phase de roulage, sont telles qu'elles provoqueraient la rotation intempestive du moyeu 4 dans le voile 3, avec pour conséquence une désolidarisation potentielle entre la roue 1 et le véhicule.

En se référant à la figure 6, les formes d'accroche 23 placées sur la surface externe de la paroi cylindrique 16 du moyeu 4, sont chacune assimilable à une bande allongée formant une surépaisseur au niveau de ladite paroi 16, chacune desdites bandes étant constituée par deux segments 24,25 de même longueur, en continuité l'un de l'autre et non alignés. De cette manière, les deux segments 24,25 d'une même forme d'accroche 23 définissent une arête saillante 26, l'ensemble des arêtes saillantes 26 formées par toutes les formes d'accroche 23 placés autour du moyeu 4 délimitant une circonférence élargie du moyeu 4. Autrement dit, le moyeu 4 possède une circonférence maximale au niveau des arêtes saillantes 26 en continuité les unes des autres, ladite circonférence diminuant progressivement le long de chaque forme d'accroche 23 en s'éloignant de ladite arête 26, pour se stabiliser à une valeur minimale correspondant à une extrémité de ladite forme d'accroche 23. Cette configuration en saillie de la paroi cylindrique 16 du moyeu 4, permet de bloquer ledit moyeu 4 dans le voile 3 de la roue 1 de manière à ce qu'il ne se déplace pas en translation, le long de son axe de rotation, sous l'effet des diverses contraintes engendrées lors des phases de roulage du véhicule. Si le moyeu 4 est métallique, alors lesdites formes d'accroche sont également métalliques et fabriquées en même temps que ledit moyeu 4. Si le moyeu 4 est en matériau polymère thermoplastique, les formes d'accroches 23 sont également en polymère thermoplastique.

Globalement, les formes d'accroche 23 placées à la périphérie du moyeu 4, empêchent, d'une part, une rotation du moyeu 4 dans le voile 3 autour de son axe de rotation, et d'autre part, un déplacement en translation dudit moyeu 4 dans ledit voile 3 le long de son axe de rotation.

Une roue 1 selon l'invention peut s'obtenir à partir d'un premier procédé utilisant la technologie d'injection soudure. Un tel procédé comprend les étapes suivantes :
- une étape de moulage d'une partie principale en thermoplastique constituée par la jante 2, l'une des deux parois 7,8 annulaires du voile 3, le réseau de nervures 9 et le moyeu thermoplastique 4,
- une étape de moulage en thermoplastique de l'autre paroi annulaire 7,8 du voile 3,
- une étape de soudure de l'autre paroi annulaire 7,8 sur la partie principale moulée.

La paroi annulaire qui est moulée à part, peut indifféremment être la paroi annulaire interne 8 ou la paroi annulaire externe 7 du voile 3. Il est à noter qu'un tel procédé peut comprendre, une étape préalable de mise en place, dans le moule du moyeu métallique 4, qui sera alors surmoulé.

Une roue 1 selon l'invention peut également s'obtenir à partir d'un deuxième procédé utilisant la technologie du noyau fusible qui permet de fabriquer les corps creux de la roue en une seule opération de moulage thermoplastique. Un tel procédé comprend les étapes suivantes :
- une étape de mise en oeuvre d'un noyau métallique à bas point de fusion dit noyau fusible. La mise en oeuvre du noyau fusible est habituellement réalisée par injection dans un premier moule,
- une étape de démoulage de ce noyau métallique suivie d'un refroidissement dudit noyau métallique,
- une étape de mise en place de ce noyau métallique dans le moule d'injection de la roue,
- une étape de moulage de la roue dans ledit moule d'injection de la roue, étape pendant laquelle le noyau métallique est surmoulé par le thermoplastique,
- une étape de chauffage de l'ensemble constitué par la roue thermoplastique et le noyau métallique surmoulé permettant de faire fondre le noyau métallique surmoulé,
- une étape d'évacuation du métal en fusion,
- une étape de récupération de la roue moulée.

Une fois fabriquée, la roue 1 présente une série de trous de faible diamètre, matérialisant les passages de fuite du métal en fusion lors de ce procédé. Il est à noter que ces trous n'ont bien évidemment aucune influence sur la tenue mécanique de ladite roue 1.

## Revendications

1. Roue de véhicule (1) obtenue à partir d'un polymère thermoplastique, ladite roue (1) comprenant une jante (2), un moyeu (4) et un voile (3), s'étendant entre ladite jante (2) et ledit moyeu (4), ledit voile (3) comportant un réseau de nervures (9,17,18) inséré entre deux parois annulaires (7,8), la jante (2), les deux parois annulaires (7,8) et le réseau de nervures (9,17,18) étant réalisés à partir d'un matériau polymère thermoplastique, et chaque nervure (9,17,18) s'étendant tangentiellement au moyeu (4), **caractérisée en ce que** le réseau de nervures (9) comprend un premier sous-groupe de nervures (17) orientées dans le sens horaire et un deuxième sous-groupe de nervures (18) orientées dans le sens trigonométrique.

2. Roue de véhicule selon la revendication 1, **caractérisée en ce que** chaque nervure (9,17,18) relie une paroi cylindrique (30) du voile (3) délimitant un canal interne destiné à loger le moyeu (4), et la jante (2).

3. Roue de véhicule selon la revendication 2, **caractérisée en ce qu'**une première extrémité de chaque nervure (9,17,18) est solidaire de la jante (2) et **en ce qu'**une deuxième extrémité de chacune desdites nervures (9,17,18) est solidaire de la paroi cylindrique (30) du voile (3) délimitant le canal interne.

4. Roue de véhicule selon l'une quelconque des revendications 1 à 3, **caractérisée en ce que** le moyeu (4) comprend une pluralité de formes d'accroches (23) à sa périphérie (16), et **en ce que** lesdites formes d'accroches (23) émergent dudit moyeu (4) pour former des protubérances.

5. Roue de véhicule selon la revendication 4, **caractérisée en ce que** chaque forme d'accroche (23) s'étend à la périphérie (16) du moyeu (4) parallèlement à l'axe de révolution dudit moyeu (4), et **en ce que** chaque forme d'accroche (23) est constituée de deux segments bombés (24,25) non alignés définissant une arête saillante (26).

6. Roue de véhicule selon l'une quelconque des revendications 1 à 5, **caractérisée en ce que** le moyeu (4) est réalisé à partir d'un polymère en thermoplastique, et **en ce que** ledit moyeu (4) possède au moins un trou (21) pour le passage d'une vis de fixation, chacun desdits trous (21) étant bordé par un insert métallique (22).

7. Roue de véhicule selon l'une quelconque des revendications 1 à 5, **caractérisée en ce que** le moyeu (4) est métallique.

8. Procédé de fabrication d'une roue (1) selon l'une quelconque des revendications 1 à 7, ledit procédé s'appuyant sur une technologie d'injection soudure, **caractérisée en ce qu'**il comprend les étapes suivantes :
- une étape de moulage d'une partie principale constituée de la jante (2), de l'une des parois annulaires (7,8) du voile (3) du réseau de nervures (9,17,18), et du moyeu (4),
- une étape de moulage de l'autre paroi annulaire (7,8) du voile (3),
- une étape de soudure de l'autre paroi annulaire (7,8) sur la partie principale moulée.

9. Procédé de fabrication d'une roue (1) selon l'une quelconque des revendications 1 à 7, ledit procédé s'appuyant sur une technologie de moulage à noyau fusible, **caractérisée en ce qu'**il comprend les étapes suivantes :
- une étape de mise en oeuvre d'un noyau métallique à bas point de fusion,
- Une étape de démoulage de ce noyau métallique suivie d'un refroidissement dudit noyau métallique,
- Une étape de mise en place de ce noyau métallique dans le moule d'injection de la roue,
- une étape de moulage de la roue dans ledit moule d'injection de la roue, étape pendant laquelle le noyau métallique est surmoulé par le thermoplastique,
- une étape de chauffage de l'ensemble constitué par la roue thermoplastique et le noyau métallique surmoulé permettant de faire fondre le noyau métallique surmoulé,
- une étape d'évacuation du métal en fusion,
- une étape de récupération de la roue moulée.

## Patentansprüche

1. Fahrzeugrad (1) aus einem thermoplastischen Polymer, wobei das Rad (1) eine Felge (2), eine Nabe (4) und eine Radschüssel (3), die sich zwischen der Felge (2) und der Nabe (4) erstreckt, umfasst, wobei die Radschüssel (3) ein Netz von Rippen (9, 17, 18) aufweist, das zwischen zwei ringförmigen Wänden (7, 8) eingefügt ist, wobei die Felge (2), die zwei ringförmigen Wände (7, 8) und das Netz von Rippen (9, 17, 18) aus einem thermoplastischen Polymermaterial hergestellt sind und jede Rippe (9, 17, 18) sich tangential zur Nabe (4) erstreckt, **dadurch gekennzeichnet, dass** das Netz von Rippen (9) eine erste Untergruppe von Rippen (17), die im Uhrzeigersinn ausgerichtet sind, und eine zweite Untergruppe von Rippen (18), die entgegen dem Uhrzeigersinn ausgerichtet sind, umfasst.

2. Fahrzeugrad nach Anspruch 1, **dadurch gekennzeichnet, dass** jede Rippe (9, 17, 18) eine zylindrische Wand (30) der Radschüssel (3), die einen zur Aufnahme der Nabe (4) bestimmten inneren Kanal begrenzt, und die Felge (2) verbindet.

3. Fahrzeugrad nach Anspruch 2, **dadurch gekennzeichnet, dass** ein erstes Ende jeder Rippe (9, 17, 18) fest mit der Felge (2) verbunden ist, und dadurch, dass ein zweites Ende jeder der Rippen (9, 17, 18) mit der zylindrischen Wand (30) der Radschüssel (3), die den inneren Kanal begrenzt, fest verbunden ist.

4. Fahrzeugrad nach einem der Ansprüche 1 bis 3, **dadurch gekennzeichnet, dass** die Nabe (4) mehrere Verhakungsformen (23) an ihrem Umfang (16) aufweist, und dadurch, dass die Verhakungsformen (23) aus der Nabe (4) herausragen, um Vorsprünge zu bilden.

5. Fahrzeugrad nach Anspruch 4, **dadurch gekennzeichnet, dass** sich jede Verhakungsform (23) am Umfang (16) der Nabe (4) parallel zur Drehachse der Nabe (4) erstreckt, und dadurch, dass jede Verhakungsform (23) aus zwei nicht ausgerichteten gewölbten Segmenten (24, 25) besteht, die eine vorstehende Kante (26) definieren.

6. Fahrzeugrad nach einem der Ansprüche 1 bis 5, **dadurch gekennzeichnet, dass** die Nabe (4) aus einem Polymer aus Thermoplast hergestellt ist, und dadurch, dass die Nabe (4) wenigstens ein Loch (21) für den Durchgang einer Befestigungsschraube besitzt, wobei jedes der Löcher (21) von einem metallischen Einsatz (22) eingefasst ist.

7. Fahrzeugrad nach einem der Ansprüche 1 bis 5, **dadurch gekennzeichnet, dass** die Nabe (4) aus Metall besteht.

8. Verfahren zur Herstellung eines Rades (1) nach einem der Ansprüche 1 bis 7, wobei sich das Verfahren auf eine Spritzguss-Schweiß-Technologie stützt, **dadurch gekennzeichnet, dass** es die folgenden Schritte umfasst:
- einen Schritt des Formens eines Hauptteils, der aus der Felge (2), einer der ringförmigen Wände (7, 8) der Radschüssel (3), dem Netz von Rippen (9, 17, 18) und der Nabe (4) besteht,
- einen Schritt des Formens der anderen ringförmigen Wand (7, 8) der Radschüssel (3),
- einen Schritt des Schweißens der anderen ringförmigen Wand (7, 8) an den geformten Hauptteil.

9. Verfahren zur Herstellung eines Rades (1) nach einem der Ansprüche 1 bis 7, wobei sich das Verfahren auf eine Technologie des Schmelzkern-Spritzgießens stützt, **dadurch gekennzeichnet, dass** es die folgenden Schritte umfasst:
- einen Schritt der Herstellung eines Metallkerns mit niedrigem Schmelzpunkt,
- einen Schritt der Entformung dieses Metallkerns, gefolgt von einer Abkühlung des Metallkerns,
- einen Schritt der Anbringung dieses Metallkerns in der Spritzform des Rades,
- einen Schritt des Formens des Rades in der Spritzform des Rades, wobei während dieses Schrittes der Metallkern mit dem Thermoplast umspritzt wird,
- einen Schritt der Erwärmung der aus dem thermoplastischen Rad und dem umspritzten Metallkern bestehenden Gesamtheit, der es ermöglicht, den umspritzten Metallkern schmelzen zu lassen,
- einen Schritt des Ablassens des geschmolzenen Metalls,
- einen Schritt der Entnahme des geformten Rades.

## Claims

1. Vehicle wheel (1) obtained from a thermoplastic polymer, said wheel (1) comprising a rim (2), a hub (4) and a wheel disk (3), extending between said rim (2) and said hub (4), said wheel disk (3) comprising a network of ribs (9, 17, 18) inserted between two annular walls (7, 8), the rim (2), the two annular walls (7, 8) and the network of ribs (9, 17, 18) being made from a thermoplastic polymer, and each rib (9, 17, 18) extending tangentially to the hub (4), **characterized in that** the network of ribs (9) comprises a first sub-group of ribs (17) oriented in the clockwise direction and a second sub-group of ribs (18) oriented in the counterclockwise direction.

2. Vehicle wheel according to Claim 1, **characterized in that** each rib (9, 17, 18) connects a cylindrical wall (30) of the wheel disk (3) delimiting an internal passage intended to house the hub (4), and the rim (2).

3. Vehicle wheel according to Claim 2, **characterized in that** a first end of each rib (9, 17, 18) is secured to the rim (2) and **in that** a second end of each of said ribs (9, 17, 18) is secured to the cylindrical wall (30) of the wheel disk (3) delimiting the internal passage.

4. Vehicle wheel according to any one of Claims 1 to 3, **characterized in that** the hub (4) comprises a plurality of keying shapes (23) at its periphery (16), and **in that** said keying shapes (23) emerge from said hub (4) to form protuberances.

5. Vehicle wheel according to Claim 4, **characterized in that** each keying shape (23) extends at the periphery (16) of the hub (4) parallel to the axis of revolution of said hub (4), and **in that** each keying shape (23) is made up of two non-aligned domed segments (24, 25) defining a salient edge (26).

6. Vehicle wheel according to any one of Claims 1 to 5, **characterized in that** the hub (4) is made of a thermoplastic polymer, and **in that** said hub (4) has at least one hole (21) for the passage of a fixing screw, each of said holes (21) being bordered by a metallic insert (22).

7. Vehicle wheel according to any one of Claims 1 to 5, **characterized in that** the hub (4) is metallic.

8. Method of manufacturing a wheel (1) according to any one of Claims 1 to 7, said method relying on an injection-welding technology, **characterized in that** it comprises the following steps:
- a step of molding a main part consisting of the rim (2), of one of the annular walls (7, 8) of the wheel disk (3) of the network of ribs (9, 17, 18), and of the hub (4),
- a step of molding the other annular wall (7, 8) of the wheel disk (3),
- a step of welding the other annular wall (7, 8) to the molded main part.

9. Method of manufacturing a wheel (1) according to any one of Claims 1 to 7, said method relying on fusible lost-core investment casting technology, **characterized in that** it comprises the following steps:
- a step of producing a low-melting-point metallic core,
- a step of demolding this metallic core, followed by a cooling of said metallic core,
- a step of placing this metallic core in the injection mold for the wheel,
- a step of molding the wheel in said injection mold for the wheel, during which step the metallic core is overmolded with the thermoplastic,
- a step of heating the assembly consisting of the thermoplastic wheel and the overmolded metallic core that enables the overmolded metallic core to be melted,
- a step of removing the molten metal,
- a step of retrieving the molded wheel.
